# FASCICULE DE BREVET EUROPEEN

(11) **EP 1 043 141 B1**
(45) Date de publication et mention de la délivrance du brevet: **18.06.2003**
(21) Numéro de dépôt: 00420055.6
(22) Date de dépôt: 28.03.2000
(51) Int. Cl.: B29C 47/04, B29C 47/10, B44F 9/02, C08K 3/00

(54) **Procédé de fabrication d'objets extrudés et veinés dans la masse, à base de polymères thermoplastiques**
Verfahren zur Herstellung extrudierter thermoplastischer Gegenstände mit Holzmaserstruktur
Method of manufacturing extruded thermoplastic articles having a wood-grain appearance through the article

(30) Priorité: 29.03.1999 FR 9904195
(43) Date de publication de la demande: 11.10.2000
(73) Titulaire: Socrep S.A., 69120 Vaulx en Velin (FR)
(72) Inventeur: Crouzoulon, Pierre, 69006 Lyon (FR)
(74) Mandataire: Tilloy, Anne-Marie

(56) Documents cités:
- EP-A- 0 046 579
- DE-A- 1 963 161
- DE-A- 4 426 270
- FR-A- 2 101 956
- FR-A- 2 564 374
- FR-A- 2 738 768
- DATABASE WPI Section Ch, Week 199525 Derwent Publications Ltd., London, GB; Class A32, AN 1995-190870 XP002125203 -& JP 07 109373 A (TSUSUENSUCHOWKONIEKUUFUN YOSHENKONSU), 25 avril 1995 (1995-04-25)
- PATENT ABSTRACTS OF JAPAN vol. 1995, no. 11, 26 décembre 1995 (1995-12-26) & JP 07 214631 A (ECHO CHEM KK), 15 août 1995 (1995-08-15)

## Description

La présente invention concerne un procédé de fabrication d'objets extrudés finis ou semi-ouvrés, en particulier des profilés et des tubes, en matière thermoplastique, à aspect veiné en surface et dans la masse, ce procédé permettant de faire apparaître distinctement des veines dans la masse et sur la surface des objets extrudés avec des nuances colorées semblables à celles du bois ou des pierres telles que le marbre.

On connaît des procédés d'extrusion de polymères thermoplastiques additionnés d'adjuvants et de colorants, afin d'imiter le bois, mais ils ne permettent pas de fabriquer des objets extrudés dont on peut faire varier la structure, afin qu'elle soit, soit compacte, soit cellulaire et simultanément obtenir un aspect veiné imitant correctement le bois, en surface et à coeur.

Ainsi, le brevet français n° 2 101 956 décrit un procédé d'extrusion d'une composition en une structure cellulaire analogue au bois, à cellules fermées, résistante aux chocs, amincissable et clouable, et ayant une peau en formant partie intégrante. Cette composition comprend une résine vinylique particulière, un lubrifiant, un agent d'expansion, et un système activateur constitué de thioglycolate d'organoétain, et d'un sel de baryum d'un acide gras saturé ayant de 14 à 18 atomes de carbone. Cette composition est exempte de matières colorantes. Cette composition est prémélangée dans un mélangeur classique à haute intensité, en introduisant les matières premières précitées dans un ordre déterminé, puis refroidie. Le prémélange pulvérulent obtenu est ensuite introduit dans une extrudeuse. Ce procédé d'extrusion, qui implique un prémélange à chaud des matières premières en vue de préparer une matière composite (le plus souvent désignée sous le vocable de "compounds") à l'état pulvérulent, est compliqué.

En fin d'extrusion, la masse fondue traverse un filtre à mailles fines, ce qui a pour conséquence de l'homogénéiser.

Compte tenu de ce qui précède, le procédé d'extrusion décrit dans le brevet français n° 2 101 956 ne permet pas d'obtenir un profilé ayant l'aspect veiné du bois, en surface et à coeur.

Dans la demande de brevet européen n° 46 579, pour obtenir un profilé à aspect veiné, il est préconisé de partir d'un prémélange de granulés contenant du polychlorure de vinyle, divers adjuvants, dont des colorants, et des granulés colorés à base d'un polymère particulier comme des polyéthylènes chlorés ou des copolymères d'éthylène et d'acétate de vinyle. Ce prémélange est réalisé, généralement, à une température de 120°C, refroidi puis moulé par injection, ou extrudé. Par conséquent, ce procédé implique aussi un prémélange à chaud des matières premières en vue de préparer une matière composite (ou "compounds"), qui favorise une coloration relativement homogène dans la masse. Dès lors, les veines sont moins visibles, voire pas du tout. Aucune indication précise n'est donnée pour l'étape d'extrusion.

Ce procédé à plusieurs étapes est compliqué et, par conséquent, coûteux. En outre, il ne permet de fabriquer que des profilés à structure dense.

Plus récemment, il a été décrit, dans la demande de brevet japonais JP 07 109373, un procédé de fabrication de bois synthétique avec un motif veiné, comprenant trois étapes :
- une première étape consistant à mélanger une résine primaire, une résine secondaire, un agent d'expansion, un stabilisant et un lubrifiant, et à produire un mélange pulvérulent avec des grains de particules d'environ 2-4 microns,
- une seconde étape consistant à granuler une partie du mélange pulvérulent obtenu à l'issue de la première étape, pour obtenir des granulés de diamètre variant de 3 à 5 mm,
- une troisième étape d'extrusion, dans une extrudeuse à vis, dudit mélange pulvérulent et desdits granulés, dans un rapport pondéral variant de 1:10 à 1:4.

Lors de la première étape, un peu de pigment peut être additionné aux résines primaire et secondaire, non teintées dans la masse.

Lors de la seconde étape, la préparation de granulés, à partir d'une partie du mélange pulvérulent, implique l'utilisation d'un granulateur, c'est-à-dire d'une extrudeuse terminée par une filière comprenant généralement une grille, et suivie d'un dispositif adapté de découpe des granulés. A l'intérieur de cette extrudeuse, le mélange pulvérulent se transforme en masse fondue, et est brassé et homogénéisé. Les granulés obtenus sont teintés dans la masse et ont une teinte uniforme.

Dans ces conditions, des veines de couleurs différentes ne peuvent être obtenues dans ce bois synthétique.

En outre, de la même façon que les procédés précités, ce procédé implique aussi un prémélange à chaud des matières premières en vue de préparer une matière composite (ou "compounds").

On connaît également, par la demande de brevet japonais JP 7214631, un procédé de fabrication par extrusion d'un bois synthétique comprenant les étapes principales suivantes :
- alimentation d'une extrudeuse avec une matière première constituée d'une résine thermoplastique synthétique colorée, une partie de cette résine ayant des nuances colorées correspondant au bois d'été et, l'autre partie, minoritaire, ayant des nuances colorées correspondant au bois d'hiver,
- extrusion de cette matière première et passage du flux fondu entre la sortie de l'extrudeuse et la filière, au travers d'un élément annulaire présentant une pluralité de passages.

Le procédé décrit dans cette demande de brevet japonais n'est prévu que pour un seul type de formule de résines thermoplastiques de départ.

On connaît enfin, par la demande de brevet DE 4426270, un procédé de fabrication d'un bois synthétique qui consiste :
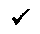 à réaliser un premier mélange pulvérulent comprenant du chlorure de polyvinyle, un agent stabilisant, un agent plastifiant, un agent de modification à base d'acide acrylique et un pigment, le mélange pulvérulent étant soumis à une température comprise entre 100°C et 110°C ;
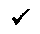 à introduire dans ce premier mélange un agent d'expansion (à base d'ammonium) ce qui constitue un deuxième mélange dont la température est abaissée de 100°C-110°C à environ 50°C-60°C ;
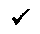 à transformer le deuxième mélange en granulat à base de chlorure de polyvinyle ;
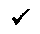 à mélanger le granulat à base de chlorure de polyvinyle avec de la poudre de chlorure de polyvinyle avec de la poudre de chlorure de polyvinyle, à raison de 15 à 25% en poids de ladite poudre par rapport au poids total du mélange, en constituant un troisième mélange ;
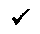 à mettre en oeuvre ce troisième mélange dans un dispositif approprié pour former le bois synthétique.

Toutefois, le procédé décrit dans cette demande de brevet allemand utilise un seul type de chlorure de vinyle qui est mis en oeuvre selon deux fractions dont une seule, présente dans le premier mélange est adjuvantée et teintée dans la masse, puis portée à température élevée et sous cette température, reçoit un agent d'expansion.

La mise en oeuvre du troisième mélange précédemment évoqué pour réaliser du bois synthétique conduit à un objet dont l'aspect de surface et à coeur n'est pas satisfaisant.

Aucun des brevets précités ne décrit un procédé de fabrication d'objets extrudés à aspect veiné en surface et dans la masse, permettant de faire varier à volonté et en continu l'intensité de la coloration et la densité des objets extrudés.

La présente invention a pour objet un procédé ne présentant pas les inconvénients des procédés précités.

Ainsi, un objectif principal de l'invention est un procédé de fabrication d'objets extrudés dont on peut faire varier en continu l'intensité des couleurs, la densité et la structure pour obtenir soit une structure cellulaire homogène ou une structure compacte, les objets extrudés obtenus ayant en outre un aspect veiné bien marqué, en surface et dans la masse, imitant bien l'apparence externe et interne des différents types de bois et de tige ligneuse de certaines plantes, comme le rotang (rotin) ou le bambou, ou l'apparence externe et interne des pierres comme le marbre.

Un autre objectif important de l'invention est un procédé de fabrication d'objets extrudés, à aspect veiné bien marqué en surface et dans la masse, qui soit simple et reproductible, en particulier qui puisse être mis en oeuvre à partir de matières premières disponibles dans le commerce, et qui ne nécessite pas la préparation préalable d'un "compounds".

Un autre objectif important de l'invention est un procédé de fabrication d'objets extrudés finis ou semi-ouvrés, pouvant être formés et/ou thermoformés, et travaillés dans les mêmes conditions que le bois, par exemple, taillés, cloués, collés, peints, vernis, etc.

Conformément à la présente invention, on a trouvé un procédé de fabrication par extrusion d'objets, en particulier des profilés et des tubes, à base de polymères thermoplastiques, à aspect veiné en surface et dans la masse, permettant d'atteindre les objectifs précités. Ce procédé consiste en une combinaison de caractéristiques essentielles qui suivent :
(1) on utilise une extrudeuse monovis composée d'au moins trois zones fonctionnelles successives: une zone d'alimentation ou d'entrée, une zone centrale de compression ou de fusion et une zone de pompage ou de sortie, l'extrudeuse monovis étant suivie d'une filière puis par un conformateur,
(2) en continu, on prépare à température inférieure à 50°C un mélange homogène, qui comprend :
   - au moins deux composants, adjuvantés et teintés dans la masse, de couleurs différentes, chaque composant étant à base d'un polymère thermoplastique, une partie au moins de l'un ou de ces deux composants étant sous la forme de granulés,
   - si nécessaire, un ou plusieurs additifs tels qu'un ou plusieurs agents pour améliorer les caractéristiques aux chocs des objets extrudés,
   et on introduit le mélange homogène dans la zone d'alimentation de l'extrudeuse, la température de consigne de l'extrudeuse dans la zone d'alimentation étant réglée à une valeur inférieure à la température de fusion des polymères thermoplastiques,
(3) on règle la température de consigne de l'extrudeuse au niveau de la zone de compression à une valeur inférieure ou égale à la température de fusion des polymères thermoplastiques,
(4) on règle la température de consigne de l'extrudeuse au niveau de la zone de pompage, à une valeur supérieure à la température de fusion des polymères thermoplastiques,
(5) on règle le temps de séjour du mélange dans l'extrudeuse en vue d'obtenir un mélange fondu et malaxé de façon hétérogène en sortie de l'extrudeuse,
(6) ensuite on divise le flux sortant de l'extrudeuse en au moins deux flux qui alimentent la filière puis le conformateur,
(7) et on provoque l'expansion du flux sortant de l'extrudeuse :
   - soit en injectant un gaz inerte sous pression contrôlée dans le flux de mélange fondu et malaxé de façon hétérogène sortant de l'extrudeuse, avant la division de ce flux ;
   - soit en ajoutant un agent d'expansion dans le mélange homogène des matières premières, avant son introduction dans la zone d'alimentation de l'extrudeuse et en activant l'agent d'expansion dans la partie finale de la zone de pompage, proche de la filière, afin de provoquer l'expansion en sortie de la filière.

L'ensemble des conditions opératoires (1) à (7) précitées contribuent à l'obtention d'un mélange fondu et malaxé de façon hétérogène en sortie de l'extrudeuse.

Les étapes (6) et (7) du procédé selon l'invention permettent de multiplier les hétérogénéités du mélange fondu et de favoriser l'apparition de veines bien distinctes en surface et dans la masse des objets extrudés, ces veines étant analogues, dans leur forme et leur couleur, selon le cas, à celles du bois ou de tiges ligneuses de certaines plantes, ou à celles des pierres comme le marbre. Le dispositif utilisé pour diviser le flux de mélange fondu ne peut pas être un filtre à mailles étroites ou une grille, car on homogénéise le mélange fondu et, de ce fait, on perd le veinage.

Une première caractéristique essentielle du procédé selon l'invention réside dans le choix de l'extrudeuse qui doit être à une vis pour obtenir des objets extrudés avec un effet veiné bien distinct en surface et dans la masse, imitant correctement le bois ou les pierres comme le marbre.

Avantageusement, l'extrudeuse monovis présente l'une ou l'autre des deux caractéristiques techniques (a) et (b) qui suivent :
(a) la longueur (L) de la monovis varie d'environ 20 à environ 28 diamètres (D),
(b) le taux de compression dans la zone de compression de la monovis varie d'environ 1,5 à environ 2,5. Le taux de compression correspond au rapport du diamètre du noyau de la monovis dans la zone de pompage sur le diamètre du noyau de la monovis dans la zone d'alimentation.

De préférence, la monovis vérifie à la fois les caractéristiques (a) et (b) précitées.

Une seconde caractéristique essentielle du procédé selon l'invention réside dans des opérations menées en continu, à savoir la préparation à température ambiante d'un mélange homogène de l'ensemble des matières premières utilisées pour fabriquer les objets extrudés, suivie par l'introduction en continu du mélange homogène dans la zone d'alimentation de l'extrudeuse monovis.

Par matières premières, on entend les composants de couleurs différentes, chaque composant étant à base d'un polymère thermoplastique, et étant adjuvantés et colorés dans la masse. Les matières premières peuvent comprendre un ou plusieurs additifs et/ou un ou plusieurs agents d'expansion.

Par mélange homogène, on entend un mélange avec une distribution uniforme des matières premières malgré les différences de densité et de granulométrie, ou, en d'autres termes, un mélange avec ségrégation minimisée, voire absente.

C'est pourquoi, le dosage des matières premières, la préparation à température ambiante du mélange homogène comprenant ces matières premières et l'introduction du mélange homogène dans l'extrudeuse, sont effectués en continu, sans interruption dans le temps, afin de limiter, voire d'éliminer, les phénomènes de ségrégation dans le mélange homogène.

Avantageusement, on peut faire varier à volonté la quantité et la nature des matières premières et, ainsi, en continu, modifier l'intensité des couleurs et la densité des objets extrudés.

Le mélange homogène peut comprendre des matières premières sous la forme de poudre. De préférence, au plus 20% en poids du mélange homogène est sous la forme de poudre.

Le mélange homogène est préparé à température ambiante de l'atelier, inférieure à 50°C, généralement à environ 20°C. Ainsi, les matières premières restent solides lors de la préparation du mélange homogène. Le mélange homogène est introduit en continu et, de préférence, directement depuis les moyens de dosage et de mélange, dans l'extrudeuse sans préparation préalable d'un "compounds" ou matière composite sous forme de granulés.

De préférence, dans le cadre du procédé selon l'invention, aucune matière première n'est introduite séparément des autres matières premières dans l'extrudeuse monovis. Par conséquent, l'introduction des matières premières dans l'extrudeuse est de préférence prévue uniquement au niveau de la zone d'alimentation.

Le mélange homogène introduit dans l'extrudeuse monovis comprend au moins deux composants adjuvantés et teintés dans la masse, de couleurs différentes, chaque composant étant à base d'un polymère thermoplastique, une partie au moins de l'un ou de ces deux composants étant sous la forme de granulés.

De préférence, le mélange homogène comprend au moins trois composants à base chacun d'un polymère thermoplastique, chaque composant étant adjuvanté et teinté dans la masse, et ayant une couleur différente des autres composants, une partie au moins de l'un ou de plusieurs de ces composants étant sous la forme de granulés.

De préférence, les composants du mélange homogène sont à base d'une seule et même nature chimique de polymères thermoplastiques.

Les couleurs des composants teintés dans la masse peuvent varier du blanc au noir (en passant, notamment par les jaunes, ocres, verts, rouges, bleus, bruns, etc.). Les quantités et les couleurs des composants thermoplastiques sont adaptées en fonction des nuances colorées que l'on cherche à obtenir pour imiter un bois naturel particulier ou une pierre naturelle à effet marbré. Suivant la quantité et la couleur des composants thermoplastiques, on obtient un objet extrudé dont la couleur est plus ou moins prononcée, allant d'un bois clair à un bois foncé.

A titre de polymères thermoplastiques convenant à la mise en oeuvre du procédé selon l'invention, on peut citer les polychlorures de vinyle, les polyacétates de vinyle, les polyoléfines, les polymères styréniques, en particulier les copolymères acrylonitrile-butadiène-styrène (ABS) et les polyacryliques.

Le choix du polymère thermoplastique est déterminé en fonction des propriétés mécaniques souhaitées pour les objets extrudés.

Les polymères thermoplastiques préférés sont les polychlorures de vinyle.

Ainsi, de préférence, l'un au moins des composants, utilisés pour préparer le mélange homogène destiné à être chargé dans l'extrudeuse monovis, est constitué essentiellement de polychlorure de vinyle. Encore mieux, l'ensemble des composants thermoplastiques du mélange homogène sont constitués essentiellement de polychlorure de vinyle.

Outre des colorants, les adjuvants prévus dans la masse des polymères thermoplastiques de chaque composant peuvent être de nature chimique variable selon le type de polymère thermoplastique et les propriétés mécaniques finales souhaitées. De préférence, la quantité totale des différents adjuvants prévus dans la masse des polymères thermoplastiques, en dehors des colorants, n'excède pas 10 % en poids rapporté au poids du mélange homogène, de préférence encore au maximum 5 %.

Les colorants et les éventuels autres adjuvants prévus dans la masse des composants thermoplastiques sont choisis parmi ceux qui sont capables de supporter les conditions d'extrusion, c'est-à-dire ceux qui ne se décomposent pas aux températures prévues dans les différentes zones de l'extrudeuse monovis.

Par exemple, si les composants thermoplastiques sont à base de polychlorure de vinyle, les adjuvants qui sont généralement prévus dans la masse des composants sont des stabilisants, des lubrifiants, des colorants et éventuellement, des plastifiants. Afin d'apporter une propriété supplémentaire à l'objet extrudé, on peut choisir des composants thermoplastiques renfermant en outre un adjuvant approprié, tel qu'un agent anti-UV, des charges minérales comme par exemple des paillettes de mica pour donner un effet esthétique supplémentaire, etc.

Avantageusement, un agent pour modifier les caractéristiques aux chocs des objets extrudés est associé aux composants thermoplastiques, soit dans la masse des composants, ou bien par ajout de cet agent aux matières premières utiles à la préparation du mélange homogène, comme les composants thermoplastiques solides.

A titre d'exemple d'agent permettant de modifier les caractéristiques aux chocs des objets extrudés, on peut citer les polymères acryliques et les polyéthylènes chlorés. Les polyéthylènes chlorés sont préférés.

Il est recommandé de ne pas ajouter trop d'agent modifiant la tenue aux chocs, tels que les polymères acryliques et les polyéthylènes chlorés, car on atténue alors l'intensité des couleurs des veines des objets extrudés.

De préférence, on utilise une quantité d'agent modifiant la tenue aux chocs allant de 0,1 à 5% en poids rapporté au poids du mélange homogène.

Le mélange homogène est introduit dans la zone d'alimentation de l'extrudeuse monovis, la température de consigne de l'extrudeuse étant réglée à une valeur inférieure à la température de fusion des polymères thermoplastiques.

Dans le cas où les composants thermoplastiques sont à base de polychlorure de vinyle, cette température varie avantageusement de 150°C à 155°C.

La troisième caractéristique essentielle de l'invention a pour objectif d'effectuer la fusion du mélange homogène uniquement dans la partie finale de la zone de pompage de l'extrudeuse, c'est-à-dire la partie proche de la sortie de l'extrudeuse. A cette fin, la température de consigne de l'extrudeuse dans ces deux zones, ainsi que le temps de séjour du mélange dans l'extrudeuse, sont réglés, afin d'obtenir un mélange fondu et malaxé de façon hétérogène en sortie de l'extrudeuse.

De préférence,
- la température de consigne de l'extrudeuse, au niveau de la zone de compression, est inférieure d'au plus 25°C ou sensiblement égale à la température de fusion des polymères thermoplastiques et,
- la température de consigne de l'extrudeuse, au niveau de la zone de pompage, est :
   · supérieure d'au plus 25°C à la température de fusion des polymères thermoplastiques, dans la majeure partie de la zone de pompage,
   · supérieure d'une valeur de 10 à 30°C à la température de fusion des polymères thermoplastiques dans la partie finale de la zone de pompage, proche de la sortie de l'extrudeuse.

Dans le cas où les composants sont à base de polychlorure de vinyle, la température de consigne de l'extrudeuse varie de préférence :
. d'environ 150°C à environ 160°C dans la zone de compression,
. d'environ 170°C à environ 180°C dans la majeure partie de la zone de pompage,
. d'environ 180°C à environ 200°C dans la partie finale de la zone de pompage, proche de la sortie de l'extrudeuse.

- et la température de consigne de la filière est réglée à une valeur supérieure ou égale à la température de fusion du polychlorure de vinyle utilisé. Sinon, le produit sortant de la filière risque de présenter des défauts d'aspect. De préférence, la température de consigne de la filière est supérieure d'au plus 20°C à la température de fusion du polychlorure de vinyle utilisé. De préférence encore, la température de consigne de la filière varie d'environ 180°C à environ 200°C.

Egalement, dans ce cas précis, le temps de séjour du mélange à base de polychlorure de vinyle dans l'extrudeuse varie avantageusement entre environ 2 minutes et environ 5 minutes et est fonction de la géométrie et des dimensions de l'objet extrudé.

Conformément à une quatrième caractéristique essentielle de l'invention, en sortie de l'extrudeuse, on divise le flux sortant, constitué par le mélange fondu et malaxé de façon hétérogène, et on le divise en au moins deux flux qui alimentent une filière puis un conformateur. Le nombre de flux résultant de cette division est fonction des dimensions de la section de l'objet extrudé. Cette division doit en effet être réalisée sans freinage important du flux sortant de l'extrudeuse, sinon le mélange fondu risque de se dégrader.

De préférence, on divise le flux sortant de l'extrudeuse, ou extrudat, en quatre flux, de préférence en six flux. La division est fonction de la section de l'extrudat au niveau de cette division : plus la section est importante, plus la division pourra être élevée sans risque d'homogénéisation. Ainsi, on accroît le nombre et la netteté des veines dans la masse des objets extrudés. Comme indiqué plus haut, cette division devra être nettement moins importante que celle réalisée au travers d'un filtre ou d'une grille.

Pour ce faire, on prévoit entre la fin de l'extrudeuse monovis et la filière des moyens pour diviser le flux de mélange fondu. Ces moyens peuvent être constitués par une bague à ailettes ou bien par une bague percée d'ouvertures de dimensions suffisantes pour ne pas freiner de façon sensible le flux, et en un nombre équivalent au nombre de flux souhaité.

De préférence, on choisit une bague à ailettes fixes, les ailettes ayant une forme appropriée pour guider et diviser le flux de mélange fondu sans le freiner de façon sensible.

Conformément à l'invention, on provoque l'expansion du flux sortant de l'extrudeuse :
- soit en injectant un gaz inerte sous pression contrôlée dans le flux de mélange fondu et malaxé de façon hétérogène sortant de l'extrudeuse, avant la division de ce flux ;
- soit en ajoutant un agent d'expansion, de préférence solide, dans le mélange homogène des matières premières, avant son introduction dans la zone d'alimentation de l'extrudeuse et en activant l'agent d'expansion dans la partie finale de la zone de pompage, proche de la filière, afin de provoquer l'expansion en sortie de la filière.

L'expansion est de préférence obtenue par voie chimique et activation à chaud d'un agent porogène choisi parmi les azodicarbonamides et les bicarbonates alcalins.

Plus précisément, dans le cas où l'agent d'expansion est un agent porogène, le procédé selon l'invention comprend la combinaison des conditions opératoires (1) à (5) précitées, et les conditions opératoires supplémentaires suivantes :
- le mélange homogène comprend en outre au moins un agent d'expansion, de préférence prévu dans le mélange homogène avant son introduction dans la zone d'alimentation de l'extrudeuse,
- on règle la température de consigne de l'extrudeuse au niveau de la zone de compression et de la majeure partie de la zone de pompage, de sorte à ne pas déclencher le phénomène d'expansion, et
- on active l'agent d'expansion à la fin de la zone de pompage, peu avant la filière, en portant la température de consigne de l'extrudeuse dans cette zone, à une température suffisamment élevée pour rendre actif l'agent d'expansion, et obtenir l'expansion en sortie de l'extrudeuse.

Dans le cadre de cette variante préférentielle, on obtient des objets extrudés de densité variable pouvant aller, en moyenne, d'environ 0,6 à environ 1,5 et possédant à coeur une structure cellulaire homogène.

Egalement, les objets extrudés présentent distinctement en surface et dans la masse des veines ayant, selon le cas, les nuances colorées et la forme des veines d'un bois naturel ou des pierres comme le marbre.

L'installation industrielle utile pour la mise en oeuvre du procédé selon l'invention est simple.

Cette installation comprend, de préférence :
- des moyens de dosage des matières premières à l'état solide et des moyens d'homogénéisation de ces matières premières. A titre d'exemple, on peut prévoir un appareil doseur et mélangeur relié à des trémies indépendantes contenant chacune l'une des matières premières nécessaires à la préparation du mélange homogène, l'appareil doseur et mélangeur étant réglé en fonction de la composition préprogrammée du mélange homogène souhaité ;
- reliée directement à l'appareil doseur et mélangeur, une extrudeuse monovis dont les caractéristiques préférentielles ont été décrites ci-dessus.
- en sortie de l'extrudeuse, des moyens de division du flux de mélange fondu et malaxé de façon hétérogène sortant de l'extrudeuse, en au moins deux flux qui alimentent une filière puis un conformateur de l'objet extrudé (également connu sous le vocable de "calibreur refroidisseur"). De préférence, ces moyens de division du flux sont une bague à ailettes fixes.

Dans le cadre de l'invention, on n'utilise pas de grille de répartition comme moyen de division ou tout autre moyen équivalent favorisant l'homogénéisation du flux de mélange fondu.

Pour la fabrication d'objets extrudés pleins (joncs, profilés à section), on utilise une filière classique sans poinçon.

Pour la fabrication d'objets extrudés (tubes à section circulaire, carrée, rectangulaire ou autres, etc.), on utilise une filière classique avec poinçon.

Pour la fabrication de plaques ou de feuilles, on utilise une filière plate.

Deux procédés de conformation différents peuvent avantageusement être envisagés dans le cadre de l'invention, chacun de ces deux procédés conduisant à un objet extrudé avec un aspect de surface différent, à savoir brillant pour l'un et satiné pour l'autre.

Pour l'obtention d'un objet extrudé avec un aspect de surface brillant, une filière classique avec poinçon est indispensable. Le conformateur est alors disposé immédiatement après la filière et est distant d'au plus 0,1 mm de la sortie de la filière. Le conformateur a une section interne sensiblement égale à celle de la filière avec poinçon. Ainsi, un tube classique (ou profilé creux de section non circulaire),sortant de la filière avec poinçon, est maintenu dans le conformateur précité. L'expansion du mélange hétérogène fondu se produit alors essentiellement dans le conformateur, vers le coeur de l'objet extrudé. On obtient ainsi un objet extrudé plein avec une fine peau extérieure plus dense, qui contribue à augmenter sa résistance à la rayure et au marquage : en effet, les tags et graffitis adhèrent peu, voire pas du tout sur l'objet extrudé selon l'invention, quand il présente un aspect brillant et lisse, en surface.

Pour l'obtention d'un objet extrudé avec un aspect de surface satiné, une filière classique, à poinçon borgne, est indispensable, de section inférieure par rapport à l'entrée du conformateur. Le conformateur peut être prévu immédiatement après la sortie de la filière ou bien, le conformateur peut être éloigné de la sortie de la filière de sorte que l'expansion du mélange hétérogène fondu, sortant de la filière, s'effectue à l'air libre et vers l'extérieur. La distance du conformateur à la filière est, dans ce cas, dictée par le diamètre de l'objet extrudé durant l'expansion, et ce, jusqu'à l'obtention de la cote du conformateur On obtient ainsi un objet extrudé présentant en surface un aspect satiné, ce qui donne une imitation bois (sensation visuelle et toucher) encore meilleure.

Le procédé selon l'invention permet de préparer des objets extrudés en matières thermoplastiques, à aspect veiné en surface et dans la masse, présentant les caractéristiques qui suivent :
- ils sont obtenus à partir d'un mélange comprenant au moins deux composants à base de polychlorure de vinyle, adjuvantés, teintés dans la masse et de couleurs différentes, une partie au moins de l'un ou de ces deux composants étant sous la forme de granulés, éventuellement un ou plusieurs agents d'expansion, éventuellement un ou plusieurs agents pour modifier les caractéristiques aux chocs des profilés,
- ils présentent une répartition cellulaire homogène,
- ils ont une densité moyenne que l'on peut faire varier de 1,5 à 0,6,
- ils peuvent être soumis à des opérations de formage et de thermoformage.

Selon le cas :
- les objets extrudés sont avantageusement creux ou pleins et possèdent une peau de surface densifiée, de densité sensiblement égale à 1,5, cette peau de surface ayant un aspect mat, satiné ou brillant,
- ou les objets extrudés sont pleins et possèdent une peau de surface, de densité variant de 0,6 à 1,5 (bornes incluses), cette peau ayant un aspect mat ou satiné.

Les objets extrudés, obtenus grâce au procédé selon l'invention, peuvent être utilisés partout où le bois est utilisé, par exemple pour fabriquer du mobilier, aussi bien d'extérieur que d'intérieur, encadrements de tableaux, de portes et de fenêtres, des montants, des revêtements de sol et des parois, et, d'une manière générale, des pièces de section courante de toute nature fabriquées habituellement en bois ou en profilés plastiques. Dans le cas d'une imitation bois, les objets extrudés peuvent en outre avantageusement être soumis à des opérations de thermoformage et de formage.

Mais l'invention sera encore illustrée, sans être aucunement limitée, par la description suivante d'un mode de réalisation particulier donné à titre d'exemple.

### EXEMPLE : Fabrication d'un jonc de 25 mm de diamètre

Dans l'installation industrielle préférée, présentée plus haut dans la description, de façon continue, on prépare un mélange homogène des matières premières, à température ambiante (de l'ordre de 20° C), le mélange homogène étant, en continu et immédiatement après, introduit dans une extrudeuse monovis.

En outre, l'installation industrielle utilisée présente les caractéristiques qui suivent :
- le doseur pondéral utilisé comprend cinq alimentations en matières premières ;
- l'extrudeuse comprend une monovis de 50 mm de diamètre (D) et de longueur égale à 28 D. Le taux de compression dans la zone de compression est égale à 2. Les températures de l'extrudeuse sont :
   . au niveau de la zone d'alimentation : 150° C,
   . au niveau de la zone de compression : 155° C,
   . au niveau de la zone de pompage : 175° C et 195° C à proximité de la sortie de cette zone,
   . au niveau de la filière : 187° C.

   Le débit dé matières dans l'extrudeuse est de 40 kg par heure.
- la filière à poinçon comprend, dans le sens de défilement du flux fondu :
   . une bague de 4 ailettes fixes,
   . une filière de 25 mm de diamètre,
   . un poinçon de 10 mm de diamètre.
- le conformateur, tubulaire, de 25 mm de diamètre est distant de moins de 0,1 mm de la filière.

Les matières premières et leur dosage dans le mélange homogène sont les suivants (en pourcentage en poids) :
- 20 % de polychlorure de vinyle (PCV) rigide, de couleur marron foncé correspondant à la référence 470C dans la classification pantone, sous la forme de granulés ;
- 10 % de PVC rigide, de couleur marron clair correspondant à la référence 730C dans la classification pantone, sous la forme de granulés ;
- 69,7 % % de PVC rigide, de couleur blanc cassé correspondant à la référence 1015 dans la classification RAL, sous la forme de granulés ;
- 0,1 % de polyéthylène chloré, en poudre ;
- 0,2 % d'azodiacide carbonique diamide.

Les trois PVC utilisés ont une température de ramollissement VICAT de l'ordre de 81° C (mesurée dans les conditions de NF T 51.021B ou ISO 306B).

Le produit final obtenu, en sortie du conformateur, est un jonc plein de 25 mm de diamètre, ayant un poids de 428 g par mètre, de densité moyenne égale à 0,87, à aspect veiné en surface et dans la masse, reproduisant de façon très satisfaisante l'aspect du bois merisier, en surface et dans la masse.

## Revendications

1. Procédé de fabrication d'objets extrudés et expansés à base de polymères thermoplastiques, à aspect veiné en surface et dans la masse, ce procédé étant **caractérisé en ce que** :
(1) on utilise une extrudeuse monovis composée d'au moins trois zones fonctionnelles successives: une zone d'alimentation ou d'entrée, une zone centrale de compression ou de fusion et une zone de pompage ou de sortie, l'extrudeuse monovis étant suivie d'une filière puis par un conformateur,
(2) en continu, on prépare à température inférieure à 50°C un mélange homogène, qui comprend :
- au moins deux composants, adjuvantés et teintés dans la masse, de couleurs différentes, chaque composant étant à base d'un polymère thermoplastique, une partie au moins de l'un ou de ces deux composants étant sous la forme de granulés,
- si nécessaire, un ou plusieurs additifs tels qu'un ou plusieurs agents pour améliorer les caractéristiques aux chocs des objets extrudés,
et on introduit le mélange homogène dans la zone d'alimentation de l'extrudeuse, la température de consigne de l'extrudeuse dans la zone d'alimentation étant réglée à une valeur inférieure à la température de fusion des polymères thermoplastiques,
(3) on règle la température de consigne de l'extrudeuse au niveau de la zone de compression à une valeur inférieure ou égale à la température de fusion des polymères thermoplastiques,
(4) on règle la température de consigne de l'extrudeuse au niveau de la zone de pompage, à une valeur supérieure à la température de fusion des polymères thermoplastiques,
(5) on règle le temps de séjour du mélange dans l'extrudeuse en vue d'obtenir un mélange fondu et malaxé de façon hétérogène en sortie de l'extrudeuse,
(6) ensuite on divise le flux sortant de l'extrudeuse en au moins deux flux qui alimentent la filière puis le conformateur,
(7) et on provoque l'expansion du flux sortant de l'extrudeuse :
- soit en injectant un gaz inerte sous pression contrôlée dans le flux de mélange fondu et malaxé de façon hétérogène sortant de l'extrudeuse, avant la division de ce flux ;
- soit en ajoutant un agent d'expansion dans le mélange homogène des matières premières, avant son introduction dans la zone d'alimentation de l'extrudeuse et en activant l'agent d'expansion dans la partie finale de la zone de pompage, proche de la filière, afin de provoquer l'expansion en sortie de la filière.

2. Procédé selon la revendication 1, **caractérisé en ce que** le mélange comprend au moins trois composants à base de polymères thermoplastiques, qui sont adjuvantés et teintés dans la masse, et de couleurs différentes.

3. Procédé selon la revendication 1 ou 2, **caractérisé en ce que** :
- la température de consigne de l'extrudeuse au niveau de la zone de compression, est inférieure d'au plus 25°C ou sensiblement égale à la température de fusion des polymères thermoplastiques,
- la température de consigne de l'extrudeuse au niveau de la zone de pompage, est :
· supérieure d'au plus 25°C à la température de fusion des polymères thermoplastiques dans la majeure partie de la zone de pompage,
· supérieure d'une valeur de 10 à 30°C à la température de fusion des polymères thermoplastiques dans la partie finale de la zone de pompage, à proximité de la sortie de l'extrudeuse.

4. Procédé selon l'une des revendications précédentes, **caractérisé en ce que** la quantité totale des adjuvants prévus dans la masse des polymères thermoplastiques, en dehors des colorants, est au plus égale à 10 % en poids rapporté au poids du mélange homogène.

5. Procédé selon la revendication 4, **caractérisé en ce que** la quantité totale des adjuvants prévus dans la masse des polymères thermoplastiques, en dehors des colorants, est au plus égale à 5 % en poids rapporté au poids du mélange homogène

6. Procédé selon l'une des revendications précédentes, **caractérisé en ce que** le taux de compression dans la zone de compression varie d'environ 1,5 à environ 2,5.

7. Procédé selon l'une des revendications précédentes, **caractérisé en ce que** le rapport longueur sur diamètre (L/D) varie d'environ 20 à environ 28.

8. Procédé selon l'une des revendications précédentes, **caractérisé en ce que** les composants constituant le mélange homogène sont à base d'une seule et même nature chimique de polymères thermoplastiques.

9. Procédé selon la revendication 8, **caractérisé en ce que** les composants sont constitués essentiellement de polychlorure de vinyle.

10. Procédé selon l'une des revendications précédentes, **caractérisé en ce que** le mélange homogène, avant son introduction dans l'extrudeuse monovis, comprend au moins un agent pour modifier la tenue aux chocs des produits semi-finis, choisi parmi les polyéthylènes chlorés et les polyacryliques.

11. Procédé selon la revendication 10, **caractérisé en ce que** la quantité d'agent pour modifier la tenue aux chocs varie de 0,1 à 5 % en poids rapporté au poids du mélange homogène.

12. Procédé selon la revendication 1, **caractérisé en ce que** l'agent d'expansion est choisi parmi les azodicarbonamides et les bicarbonates alcalins.

13. Procédé selon la revendication 9, **caractérisé en ce que** la température de consigne de l'extrudeuse varie :
- d'environ 150°C à environ 155°C dans la zone d'alimentation,
- d'environ 150°C à environ 160°C dans la zone de compression,
- d'environ 170°C à environ 180°C dans la majeure partie de la zone de pompage,
- d'environ 185°C à environ 195°C dans la partie finale de la zone de pompage, située près de la filière,
et la température de consigne de la filière est supérieure ou égale à la température de fusion du polychlorure de vinyle utilisé.

14. Procédé selon la revendication 13, **caractérisé en ce que** la température de consigne de la filière est supérieure d'au plus 20°C à la température de fusion du polychlorure de vinyle utilisé.

15. Procédé selon la revendication 14, **caractérisé en ce que** la température de consigne de la filière varie d'environ 180°C à environ 200°C.

16. Procédé selon la revendication 13, **caractérisé en ce que** le temps de séjour du mélange à base de polychlorure de vinyle dans l'extrudeuse varie d'environ 2 minutes à environ 5 minutes.

17. Objets extrudés et expansés en matières thermoplastiques, à aspect veiné en surface et dans la masse, **caractérisés en ce que** :
- ils sont obtenus à partir d'un mélange comprenant au moins deux composants à base de polychlorure de vinyle, adjuvantés et teintés dans la masse, de couleurs différentes, une partie au moins de l'un ou de ces deux composants étant sous la forme de granulés, éventuellement un agent d'expansion, éventuellement un agent pour modifier les caractéristiques aux chocs des profilés ;
- ils présentent une répartition cellulaire homogène ;
- ils ont une densité variant de 1,5 à 0,6 (bornes incluses) ;
- ils peuvent être formés et thermoformés ;
- ils sont creux ou pleins et possèdent une peau de surface densifiée, de densité sensiblement égale à 1,5, cette peau de surface ayant un aspect mat, satiné ou brillant.

18. Objets extrudés et expansés en matières thermoplastiques, à aspect veiné en surface et dans la masse, **caractérisés en ce que** :
- ils sont obtenus à partir d'un mélange comprenant au moins deux composants à base de polychlorure de vinyle, adjuvantés et teintés dans la masse, de couleurs différentes, une partie au moins de l'un ou de ces deux composants étant sous la forme de granulés, éventuellement un agent d'expansion, éventuellement un agent pour modifier les caractéristiques aux chocs des profilés ;
- ils présentent une répartition cellulaire homogène ;
- ils ont une densité variant de 1,5 à 0,6 (bornes incluses) ;
- ils peuvent être formés et thermoformés ;
- ils sont pleins et possèdent une peau de surface, de densité variant de 1,5 à 0,6 (bornes incluses), cette peau de surface ayant un aspect mat ou satiné.

## Patentansprüche

1. Verfahren zur Herstellung extrudierter und expandierter thermoplastischer Gegenstände mit Maserstruktur an der Oberfläche und in der Masse,
wobei dieses Verfahren **dadurch gekennzeichnet ist, dass**:
(1) man benutzt einen Einschneckenextruder mit wenigstens drei aufeinanderfolgenden Funktionszonen: einer Zuführungs- oder Eingangszone, einer zentralen Druck- oder Schmelzzone und einer Pump- oder Ausgangszone, wobei auf den Einschneckenextruder eine Düse folgt und dann eine Formungseinrichtung,
(2) man bereitet kontinuierlich bei einer Temperatur unter 50°C eine homogene Mischung vor, die enthält:
- wenigstens zwei Komponenten, zugesetzt und in der Masse gefärbt, mit unterschiedlichen Farben, wobei jeder Komponente auf einem thermoplastischen Polymer basiert sind und wenigstens ein Teil eines oder beider Komponenten Granulatform aufweist,
- wenn nötig ein oder mehere Additive wie etwa ein oder mehrere Wirkstoffe, um die Stoß-Charakteristika der extrudierten Gegenstände zu verbessern, und man führt die homogene Mischung in die Zuführungszone des Extruders ein,
wobei die Einstelltemperatur des Extruders in der Zuführungszone auf einen Wert geregelt ist, der niedriger ist als die Schmelztemperatur der thermoplastischen Polymere,
(3) man regelt die Einstelltemperatur des Extruders in der Druckzone auf einen Wert, der unter als oder gleich wie der Schmelztemperatur der thermoplastischen Polymere ist,
(4) man regelt die Einstelltemperatur des Extruders in der Pumpzone auf einen Wert über der Schmelztemperatur der thermoplastischen Polymere ist,
(5) man regelt die Verweilzeit der Mischung in dem Extruder um eine geschmolzene und heterogen geknetete Mischung am Ausgang des Extruders zu erhalten,
(6) danach teilt man den Fluss, der aus dem Extruder herauskommt, in wenigstens zwei Flüssen, die der Düse und dann der Formungseinrichtung zuführen,
(7) und man bewirkt die Expansion des Flüsses, das aus dem Extruder herauskommt:
- entweder indem man ein inertes Gas unter kontrolliertem Druck in den Fluss der geschmolzener und heterogen gekneteter Mischung injiziert, der aus dem Extruder herauskommt ehe dieses Flüsses geteilt wird;
- oder indem man ein Expansionsmittel in der homogenen Mischung vor seiner Einführung in die Zuführungszone des Extruders hinzufügt, und indem man das Expansionsmittel in dem Endteil der Pumpzone nahe der Düse aktiviert, um die Expansion am Ausgang der Düse zu bewirken.

2. Verfahren nach Anspruch 1, **dadurch gekennzeichnet ist, dass** die Mischung wenigstens drei Komponenten auf der Basis von thermoplastischen Polymeren erhält, die zugesetzt und in der Masse gefärbt, mit unterschiedlichen Farben sind.

3. Verfahren nach Anspruch 1 oder 2, **dadurch gekennzeichnet ist:**
- **dass** die Einstelltemperatur des Extruders in der Druckzone um höchstens 25°C niedriger oder im Wesentlichen gleich der Schmelztemperatur der thermoplastischen Polymere ist,
- **dass** die Einstelltemperatur des Extruders in der Pumpzone ist:
· im Hauptteil der Pumpzone um höchstens 25°C höher als die Schmelztemperatur der thermoplastischen Polymere,
· im Endteil der Pumpzone, in der Nähe des Ausgangs des Extruders, um 10 bis 30°C höher als die Schmelztemperatur der thermoplastischen Polymere.

4. Verfahren nach einem der vorangehenden Ansprüche, **dadurch gekennzeichnet ist, dass** die Gesamtmenge von den Zusätzen, die in der Masse der thermoplastischen Polymere vorgesehenen sind, Farbstoffe ausgenommen, höchstens gleich 10 Gew.%, bezogen auf das Gewicht der homogenen Mischung beträgt.

5. Verfahren nach Anspruch 4, **dadurch gekennzeichnet ist, dass** die Gesamtmenge von den Zusätzen, die in der Masse der thermoplastischen Polymere vorgesehenen sind, Farbstoffe ausgenommen, höchstens gleich 5 Gew.%, bezogen auf das Gewicht der homogenen Mischung beträgt.

6. Verfahren nach einem der vorangehenden Ansprüche, **dadurch gekennzeichnet ist, dass** das Kompressionsverhältnis in der Druckzone ungefähr 1,5 bis ungefähr 2,5 variiert.

7. Verfahren nach einem der vorangehenden Ansprüche, **dadurch gekennzeichnet ist, dass** das Verhältnis Länge zu Durchmesser (UD) zwischen ungefähr 20 und ungefähr 28 variiert.

8. Verfahren nach einem der vorangehenden Ansprüche, **dadurch gekennzeichnet ist, dass** die Komponenten, die die homogene Mischung bilden auf ein und derselben chemischen Art von thermoplastischen Polymeren basiert sind.

9. Verfahren nach Anspruch 8, **dadurch gekennzeichnet ist, dass** die Komponenten im Wesentlichen durch Polyvinylchlorid gebildet sind.

10. Verfahren nach einem der vorangehenden Ansprüche, **dadurch gekennzeichnet ist, dass** die homogene Mischung, ehe sie in den Einschneckenextruder gegeben wird, wenigstens einen Wirkstoff, um die Stoßfestigkeit der nicht schlussgeglühten Produkte zu modifizieren, enthält, der unter den chlorierten Polyethylenen und den Polyacrylen ausgewählten ist.

11. Verfahren nach Anspruch 10, **dadurch gekennzeichnet ist, dass** die Menge des Wirkstoffs zum Modifizieren der Stoßfestigkeit von 0,1 bis 5 Gew.%, bezogen auf das Gewichte der homogenen Mischung, variiert.

12. Verfahren nach Anspruch 1, **dadurch gekennzeichnet ist, dass** das Expansionsmittel unter den Azodicarbonamiden und den alkalischen Bicarbonaten ausgewählt ist.

13. Verfahren nach Anspruch 9, **dadurch gekennzeichnet ist, dass** die Einstelltemperatur des Extruders variiert:
- von ungefähr 150°C bis ungefähr 155°C in der Zuführungszone,
- von ungefähr 150°C bis ungefähr 160°C in der Druckzone,
- von ungefähr 170°C bis ungefähr 180°C in dem Hauptteil der Pumpzone,
- von ungefähr 185°C bis ungefähr 195°C in dem Endteil der Pumpzone, die in der Nähe der Düse liegt,
und die Einstelltemperatur der Düse höher oder gleich der Schmelztemperatur des verwendeten Polyvinylchlorids ist.

14. Verfahren nach Anspruch 13, **dadurch gekennzeichnet ist, dass** die Einstelltemperatur der Düse höchstens um 20°C höher ist als die Schmelztemperatur des verwendeten Polyvinylchlorids.

15. Verfahren nach Anspruch 14, **dadurch gekennzeichnet ist, dass** die Einstelltemperatur der Düse von ungefähr 180°C bis ungefähr 200°C variiert.

16. Verfahren nach Anspruch 13, **dadurch gekennzeichnet ist, dass** die Verweilzeit der Mischung auf der Basis von Polyvinylchlorid in dem Extruder von ungefähr 2 Minuten bis ungefähr 5 Minuten variiert.

17. Extrudierte und expandierte thermoplastische Gegenstände mit Maserstruktur an der Oberfläche und in der Masse, **dadurch gekennzeichnet ist:**
- **dass** sie aus einer Mischung mit wenigstens zwei Komponenten auf Polyvinylchlorid-Basis, diee zugesetzt und in der Masse gefärbt sind, mit unterschiedlichen Farben, hergestellt werden, wobei wenigstens ein Teil von einer Komponente oder von beiden Komponenten Granulatform aufweist, sowie eventuell einem Expansionsmittel, sowie eventuell einem Wirkstoff zum Modifizieren der Stoß-Charakteristika der gespritzten Profile;
- **dass** sie eine homogene zellulare Verteilung aufweisen;
- **dass** sie eine von 1,5 bis 0,6 variierende Dichte aufweisen (Schranken eingeschlossen);
- **dass** sie geformt und thermogeformt sein können;
- **dass** sie hohl oder voll sind und eine verdichtete Oberflächenschicht besitzen, deren Dichte im Wesentlichen 1,5 beträgt, wobei diese Oberflächenschicht ein mattes, satiniertes oder glänzendes Aussehen hat.

18. Extrudierte und expandierte thermoplastische Gegenstände mit Maserstruktur an der Oberfläche und in der Masse, **dadurch gekennzeichnet ist:**
- **dass** sie hergestellt werden aus einer Mischung mit wenigstens zwei Komponenten auf Polyvinylchlorid-Basis, die zugesetzt und in der Masse gefärbt sind, mit unterschiedlichen Farben, wobei wenigstens ein Teil von einer Komponente oder von beiden Komponenten Granulatform aufweist, sowie eventuell einem Expansionsmittel, sowie eventuell einem Wirkstoff zum Modifizieren der Stoß-Charakteristika der gespritzten Profile;
- **dass** sie eine homogene zellulare Verteilung aufweisen;
- das sie eine von 1,5 bis 0,6 variierende Dichte aufweisen (Schranken eingeschlossen);
- **dass** sie geformt und thermogeformt sein können;
- **dass** sie voll sind und eine verdichtete Oberflächenschicht besitzen, deren Dichte im Wesentlichen von 1,5 bis 0,6 variiert (Schranken eingeschlossen), wobei diese Oberflächenschicht ein mattes oder satiniertes Aussehen hat.

## Claims

1. Method for producing extruded and expanded articles based on thermoplastic polymers, with a veined appearance on the surface and in the mass, this method being **characterised in that**:
(1) a single screw extruder is used, consisting of at least three successive operating zones: a feed or entry zone, a central compression or melting zone and a pumping or exit zone, the single screw extruder being followed by a die, then by a shaping device,
(2) a homogeneous mixture is prepared continuously at a temperature of less than 50°C, comprising:
- at least two components which have been admixed and coloured in the mass, of different colours, each component being based on a thermoplastic polymer, at least a portion of one or both components being in the form of granules,
- if necessary, one or more additives such as one or more agents to improve the impact characteristics of the extruded articles,
and the homogeneous mixture is introduced into the feed zone of the extruder, the set temperature of the extruder in the feed zone being adjusted to a value of less than the melting temperature of the thermoplastic polymers,
(3) the set temperature of the extruder in the region of the compression zone is adjusted to a value of less than or equal to the melting temperature of the thermoplastic polymers,
(4) the set temperature of the extruder in the region of the pumping zone is adjusted to a value greater than the melting temperature of the thermoplastic polymers,
(5) the residence time of the mixture in the extruder is adjusted to obtain a heterogeneously kneaded molten mixture at the exit of the extruder,
(6) the flux leaving the extruder is then divided into at least two flux which feed the die then the cooling jig,
(7) and the flux leaving the extruder is then expanded:
- either by injecting an inert gas under controlled pressure into the flux of heterogeneously kneaded molten mixture leaving the extruder, prior to division of this flux;
- or by adding a blowing agent into the homogeneous mixture of raw materials, prior to introducing it into the feed zone of the extruder and by activating the blowing agent in the final portion of the pumping zone, close to the die, to cause expansion when leaving the die.

2. Method according to claim 1, **characterised in that** the mixture comprises at least three components based on thermoplastic polymers which are admixed and coloured in the mass, and of different colours.

3. Method according to claim 1 or 2, **characterised in that**:
- the set temperature of the extruder in the region of the compression zone is at most 25°C less than or approximately equal to the melting temperature of the thermoplastic polymers,
- the set temperature of the extruder in the region of the pumping zone is:
• at most 25°C greater than the melting temperature of the thermoplastic polymers in the majority of the pumping zone,
• 10 to 30°C greater than the melting temperature of the thermoplastic polymers in the final portion of the pumping zone, close to the exit of the extruder.

4. Method according to any one of the preceding claims, **characterised in that** the total quantity of adjuvants provided in the mass of the thermoplastic polymers, apart from colorants, is at most equal to 10 % by weight based on the weight of the homogeneous mixture.

5. Method according to claim 4, **characterised in that** the total quantity of adjuvants provided in the mass of thermoplastic polymers, apart from the colorants, is at most equal to 5 % by weight based on the weight of the homogeneous mixture.

6. Method according to any one of the preceding claims, **characterised in that** the compression ratio in the compression zone varies from about 1.5 to about 2.5.

7. Method according to any one of the preceding claims, **characterised in that** the ratio of length to diameter (L/D) varies from about 20 to about 28.

8. Method according to any one of the preceding claims, **characterised in that** the components constituting the homogenous mixture are based on a single, identical chemical nature of thermoplastic polymers.

9. Method according to claim 8, **characterised in that** the components mainly comprise polyvinyl chloride.

10. Method according to any one of the preceding claims, **characterised in that** the homogeneous mixture, prior to being introduced into the single screw die, comprises at least one agent for modifying the impact strength of the semi-finished products, selected from amongst chlorinated polyethylenes and polyacrylics.

11. Method according to claim 10, **characterised in that** the quantity of agent for modifying the impact strength varies from 0.1 to 5 % by weight based on the weight of the homogeneous mixture.

12. Method according to claim 1, **characterised in that** the blowing agent is selected from amongst azodicarbonamides and alkaline bicarbonates.

13. Method according to claim 9, **characterised in that** the set temperature of the extruder varies:
- from about 150°C to about 155°C in the feed zone,
- from about 150°C to about 160°C in the compression zone,
- from about 170°C to about 180°C in the majority of the pumping zone,
- from about 185°C to about 195°C in the final part of the pumping zone, located close to the die,
and the set temperature of the die is greater than or equal to the melting temperature of the polyvinyl chloride used.

14. Method according to claim 13, **characterised in that** the set temperature of the die is at most 20°C greater than the melting temperature of the polyvinyl chloride used.

15. Method according to claim 14, **characterised in that** the set temperature of the die varies from about 180°C to about 200°C.

16. Method according to claim 13, **characterised in that** the residence time of the mixture based on polyvinyl chloride in the extruder varies from about 2 minutes to about 5 minutes.

17. Extruded and expanded articles made of thermoplastic materials with a veined appearance on the surface and in the mass, **characterised in that**:
- they are obtained from a mixture comprising at least two components based on polyvinyl chloride, admixed and coloured in the mass, of different colours, at least a portion of the one or both components being in the form of granules, optionally a blowing agent, optionally an agent for modifying the impact characteristics of the profiles;
- they have a homogeneous cell distribution;
- they have a density which varies from 1.5 to 0.6 (including bounds);
- they can be formed and thermoformed;
- they are hollow or solid and have a compacted surface skin, with a density approximately equal to 1.5, this surface skin having a matt, satiny or shiny appearance.

18. Extruded and expanded articles made of thermoplastic materials, with a veined appearance on the surface and in the mass, **characterised in that**:
- they are obtained from a mixture comprising at least two components based on polyvinyl chloride, admixed and coloured in the mass, of different colours, at least a portion of one or both components being in the form of granules, optionally a blowing agent, optionally an agent for modifying the impact characteristics of the profiles;
- they have a homogeneous cell distribution;
- they have a density which varies from 1.5 to 0.6 (including bounds);
- they can be formed and thermoformed;
- they are solid and have a surface skin, with a density which varies from 1.5 to 0.6 (including bounds), this surface skin having a matt, satiny or shiny appearance.
